Europäisches Patentamt

European Patent Office

Office européen des brevets

(11) Publication number: **0 407 068 A2**

# EUROPEAN PATENT APPLICATION

(21) Application number: **90306820.3**

(22) Date of filing: **21.06.90**

(51) Int. Cl.⁵: **G06F 1/16, H05K 7/14**

(30) Priority: **07.07.89 JP 174303/89**

(43) Date of publication of application:
**09.01.91 Bulletin 91/02**

(84) Designated Contracting States:
**DE FR GB**

(71) Applicant: **International Business Machines Corporation**
**Old Orchard Road**
**Armonk, N.Y. 10504(US)**

(72) Inventor: **Beaton, Larry G.**
**902 Flanders Street**
**Garner, North Carolina 27529(US)**
Inventor: **Kobayashi, Mitsuo**
**1353-1 Honmachida**
**Machida-shi, Tokyo-to(JP)**
Inventor: **Naitoh, Atsuhisa**
**2-2-4 Souyagi**
**Yamato-shi, Kanagawa-ken(JP)**
Inventor: **Shigaki, Hiroshi**
**3-15-1 Daikan**
**Yamato-shi, Kanagawa-ken(JP)**

(74) Representative: **Bailey, Geoffrey Alan**
**IBM United Kingdom Limited Intellectual**
**Property Department Hursley Park**
**Winchester Hampshire SO21 2JN(GB)**

(54) **Display terminal device.**

(57) A CRT monitor and accompanying control unit are described. The control unit is detachably mounted on the exterior of the CRT monitor. Video connectors on the monitor and control device are arranged to mat directly together when the control device is placed in position. This cuts down on electromagnetic interference normally associated with video cables, and reduces the numbers of cables which must be connected by the user.

FIG. 5

## DISPLAY TERMINAL DEVICE

The present invention relates to display terminal devices including CRT monitor devices and video controllers.

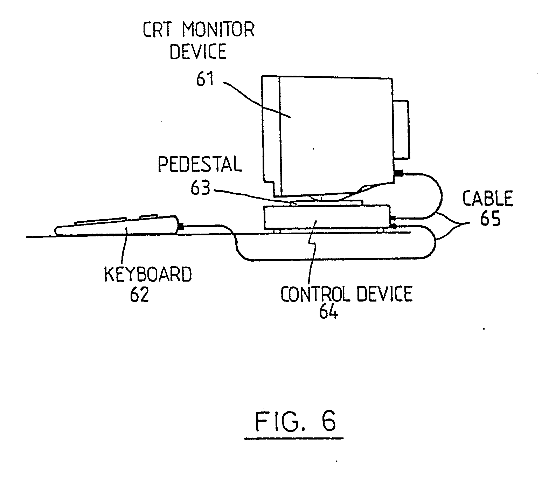

A display work station basically includes a CRT (Cathode Ray Tube) monitor device 61, a control device 64, and a keyboard 62, as shown in the accompanying Fig 6.

A printer and/or a disk memory are optionally connected, as disclosed in Japanese published unexamined patent application 58-102290. Various cables 65 are typically connected to the back surface of the control device. These cables may include a video interface cable connected to the CRT monitor device, a communication cable connected to a host processor, a power cable, a printer cable connected to a printer, an auxiliary cable connected to an auxiliary output device, such as a plotter, etc. In the figure the CRT monitor is rotatably mounted on a pedestal 63; thus the operator could horizontally rotate the CRT monitor device by about 180 degrees.

Due to the horizontal rotation of the CRT monitor device, a relatively long video interface cable which is connected between the control device and the CRT monitor device is required, and the long video interface cable is close to the communication cable and/on the power cable, so that an electromagnetic interference there between arises, which causes errors in the display operation. To prevent this electromagnetic interference, a specially shielded high cost cable is generally used as the video interface cable.

Another problem in the prior art is that the operator or user must connect a number of cables to the CRT monitor device, control device, keyboard, the printer, etc. at an initial set up of the display work station. Cable connections are also required when the control device or the CRT monitor device is replaced by a device of high level function. To connect the cable, the operator inserts the connectors of the cable to the connectors mounted on the device and screws the connectors of the cable to the connectors on the devices. This is time consuming work for the operator.

Japanese published unexamined patent application 59-192385 shows a television set wherein a small RON cassette storing a game program is inserted into a cassette receiving slot in a front panel of the television set.

Accordingly the present invention provides a display terminal device comprising a CRT monitor device and a control device detachably mounted on and connected to said CRT monitor device for supplying video signals to said CRT monitor device.

The present invention also provides a CRT monitor device comprising:
means for detachably mounting a control device for supplying video signals to the CRT monitor device, on the exterior of the CRT monitor device; and
a video connector for receiving the video signals, the connector being mounted on the CRT monitor device and being arranged to mate with a corresponding video connector on the control device when the control device is mounted on the CRT monitor device.

Viewed from a third aspect the present invention provides a control device for supplying video signals to a CRT monitor device, comprising:
means for generating said video signals;
means for detachably mounting the control device on the exterior of the CRT monitor device; and
a video connector mounted on the control device and connected to the generating means, the connector being arranged to mate with a corresponding video connector mounted on the CRT monitor device when the control device is mounted on the CRT monitor device.

According to the invention, a display terminal device includes a CRT monitor device and a control device. The control device includes a CRT control circuit for controlling the display operations of the CRT, a character generation circuit, plural input/output buffers, a memory, a microprocessor, etc. The microprocessor performs the operations for communicating with a host processor, for controlling the display operations, and for controlling the print operations, etc. The control device is detachably mounted to the bottom of the CRT monitor device. A flat bottom surface and a downwardly extended surface from the bottom surface are formed at the bottom of the CRT monitor device. A video interface connector is mounted in the downwardly extended surface of the CRT monitor device. The video interface connector is connected to circuits for controlling the CRT within the CRT monitor device. A video interface connector is also mounted in a front surface of the control device. Both the video interface connectors are automatically mated when the control device is mounted to the CRT monitor device. A latch mechanism is provided for fixing the control device at the mounted position.

The front surface of the control device is faced to the downwardly extended surface, and a top surface of the control device is faced to the bottom surface of the CRT monitor device when both the devices are latched by the latch mechanism. A communication connector to which a communication cable from the host processor is connected, a printer connector to which a printer cable is connected, an auxiliary connector to which an auxiliary device, such as a plotter, is connected, are mounted in a back surface of the control device. A security keylock and a keyboard connector to which a keyboard cable is connected are mounted in a side surface of the control device.

The direct connections of the video interface connectors of the control device and the CRT monitor device, and the separation of the video interface connector in the front surface from the communication connector in the back surface of the control device and from the power cable in a back surface of the CRT monitor device solve the problem of electromagnetic interference and decrease the number of cables which must be connected by the operator at the initial set up or at the replacement of the control device or the CRT monitor device to upgrade the operating function.

In order that the invention may be fully understood a preferred embodiment thereof will now be described, by way of example only, with reference to the accompaning drawings in which:

Fig. 1 shows the control device mounted to the bottom of the CRT monitor device.

Fig. 2 shows the front, side and top surface of the control device.

Fig. 3 shows partial cross sections explaining the latch mechanism.

Fig. 4 shows the mount operations of the control device.

Fig. 5 shows the CRT monitor device and the three kinds of control devices, and

Fig. 6 shows the prior display system.

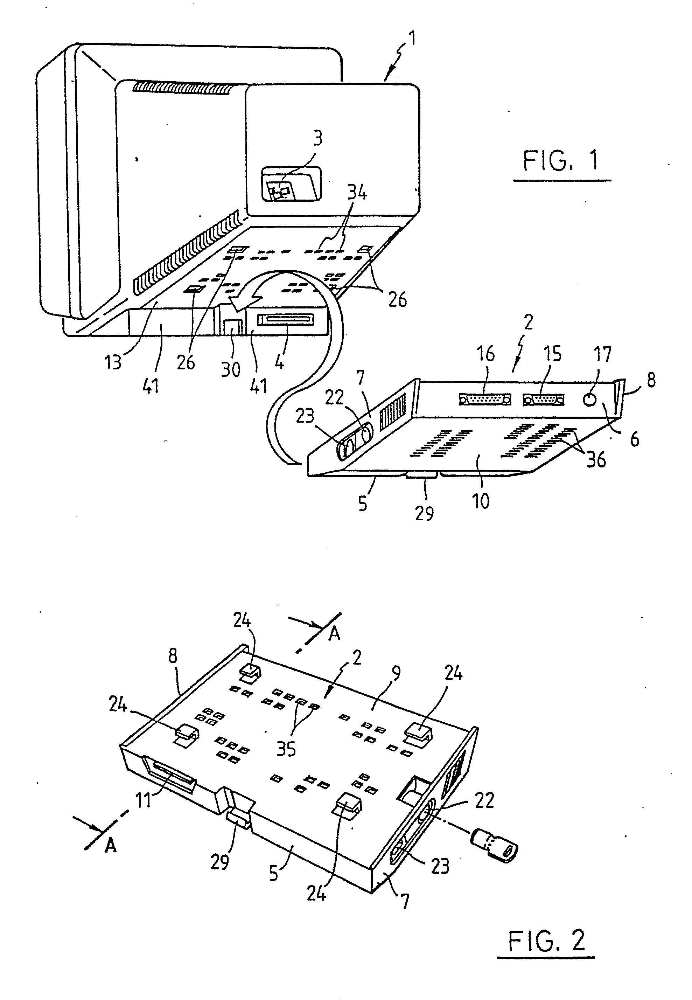

Referring to Figs. 1 and 2, a CRT monitor device 1 and a control device 2 are shown. The CRT monitor device 1 includes a CRT, a video circuit, a power supply circuit (not shown), AC power connector 3, and a video interface connector 4. As shown in Figs. 1 and 2, the control device 2 has a front surface 5, a back surface 6, a left side surface 7, a right side surface 8, a top surface 9 and a bottom surface 10. The control device 2 is detachably mounted below a bottom surface of a plate 13 of the CRT monitor device 1, as shown by an arrow 12. A downwardly extended surface 41 is formed from the bottom surface.

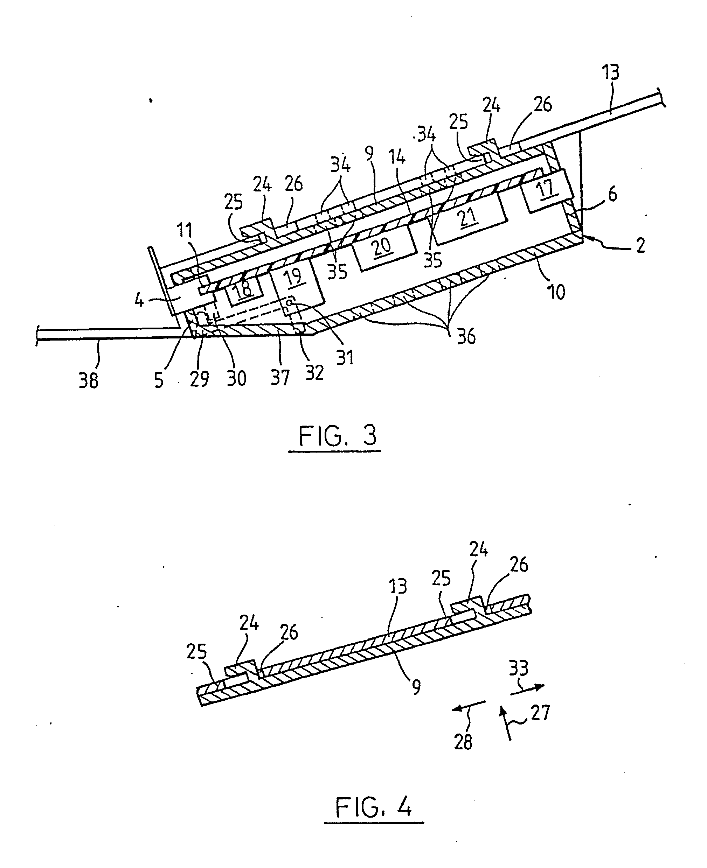

Fig 3 shows cross sections of the control device 2 and the CRT monitor device 1 viewed at line A in Fig. 2 when the control device 2 is mounted on the CRT monitor device 1. A circuit board card 14 is mounted within the control device 2. Card edge connector 11 is formed at a front end of the card 14. As shown in Fig. 1, a printer connector 15, an auxiliary connector 16 connected to a plotter, and a communication connector 17 connected to the communication cable from the host processor are mounted on the back side surface 6 of the control device 2. These connectors are mounted on the card 14. In the Fig. 3, only the communication connector 17 is shown.

Various IC elements 18, 19, 20 and 21 are mounted on the card 14. As shown in the Figs. 1 and 2, security keylock 22 and a keyboard connector 23 are provided on the left side surface 7. The keylock 22 and connector 23 are also mounted on the card 14. Data and control signals including commands are supplied from the host processor through the communication cable and the connector 17 to the circuits on the card 14 which generate data, control signals for the CRT monitor device, the keyboard, the printer and the plotter.

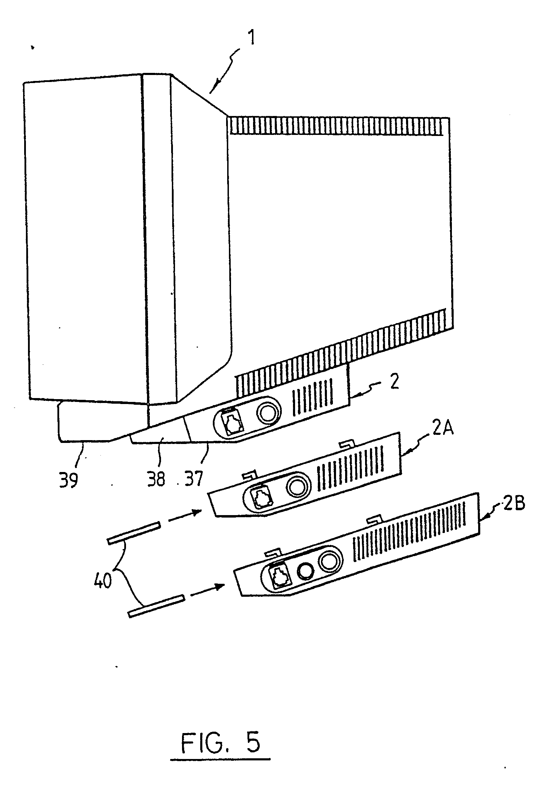

Describing the control devices, three kinds of control devices 2, 2A and 2B are shown in Fig. 5. The control device 2 performs basic level display functions, the control device 2A performs medium level display functions, and the control device 2B performs high level display functions. All the control devices include the basic circuit configuration including CRT control circuit for controlling the display of the CRT, a character generation circuit, plural input/output buffers, a memory a microprocessor, etc. The microprocessor controls various operations, such as the communication of the control device with the host processor, the display of the data sent from the host processor or the keyboard, the supply of the data to be printed to the printer device, etc. The control device 2A includes an additional receiving slot into which a function expansion card 40 is inserted, which performs upgraded functions, such as high speed scroll. The control device 2B also has the receiving slot, and further performs other additional functions, such as graphic functions.

The digital signals supplied to the CRT monitor device 1 through the video interface connectors 4 and 11 are R, G, B video signals, vertical and horizontal synchronisation signals, alarm signals, clock signals, etc. Power rails at 5V and 12V are supplied to the control unit 2 from the power supply in the CRT monitor device 1 through the connectors 4 and 11.

L shaped members 24 project from the top surface 9 of the control device 2. Rectangular apertures 26 are formed in the bottom plate 13 of the CRT monitor device 1. To mount the control device 2 to the bottom of the CRT monitor device 1,the L shaped members 24 of the control device 2 are passed through the rectangular opertures 24 in the direction shown by an arrow 27 in Fig. 4, and the control device 2 is pushed in the direction shown by an arrow 28 so that the L shaped members 24 engage with receiving portions 25 of the bottom plate 13 in the center of the front surface 5 of the control device 2.

A latch mechanism for latching the control device 2 at the pushed or mounted position is provided. The latch mechanism includes a hook member 29 pivoted at a pivot point 31 in the control device 2 and wall on the CRT monitor device 1, as shown in the Figs. 1, 2 and 3. The hook member 29 is biased in the clockwise direction. When the control device 2 is pushed in the direction shown by the arrow 28, the hook member 29 slides over the wall 30 to latch the control device 2 to the CRT monitor device 1, as shown in the Fig. 3. During the movement in the direction shown by the arrow 28, the video interface card edge connector 11 in the front surface 5 of the control device 2 connects with the video interface connector 4 in the downwardly extended surface 41 of the CRT monitor device 1, so that the latch action and the electrical connection are simultaneously performed by a single action in the direction shown by the arrow 28.

To detach the control device 2 from the CRT monitor device 1, the operator pulls a portion 32 of the hook member 29 to pivot the member 29 in the counter clockwise direction to disengage the hook from the wall 30, and moves the control device 2 in the direction shown by an arrow 33 in the Fig. 4, whereby the release or detachment action and the electrical disconnection are also simultaneously performed by a single action in the direction shown by the arrow 33.

A number of apertures 34 are formed in the bottom plate 13 of the CRT monitor device 1 as shown in the Figs. 1, 2 and 3. Air is naturally introduced into the inside of the CRT monitor device 1 to decrease the temperature within the CRT monitor device 1. In the top surface 9 of the control device 2, a number of corresponding apertures 35 are also formed. The apertures 34 in the bottom plate 13 are aligned to the apertures 35 in the top surface 9 of the control device 2, when the control device 2 is mounted in the position showm in the Fig. 3. Plural apertures 36 are also formed in the bottom surface 10, as shown in the Fig. 3. The cooling air naturally flows into the control device 2 through the apertures 36 to decrease the temperature within the control device 2, then flows into the CRT monitor device 1 through the apertures and 34. The alignment of the apertures 34 and 35 realizes a smooth flow of the cooling air into the CRT monitor device 1.

The bottom surface 10 continues to a sloped surface 37 which is aligned to an extended line from a surface 38 of the CRT monitor device 1. As shown in Fig. 5 the surfaces 37, 38 and 39 in one plane realizes a totally flat bottom surface directly placed on a desk to stabilize the CRT monitor device 1 on the desk.

Fig. 5 shows the control device 2 is replaced by a control device 2A or a control device 2B. The control device 2 performs the basic display functions, as described hereinbefore. The control device 2A requires additional circuit elements and an additional card space to perform medium level display functions including basic display function and additional functions so that the length of the control device 2A is longer than the control device 2. The control device 2B performs higher level display functions than the medium level display functions, so that the device 2B requires more circuit elements and card space than that of the control device 2A, whereby the control device 2B is longer than the control device 2A. Both the control devices 2A and 2B are provided with the same L shaped members 24 and the hook member 29 as that of the control device 2, so that the control device 2A or 2B is mounted at the bottom of the CRT monitor device 1 in place of the control device 2.

The reasons for detachably mounting the control device 2, 2A or 2B at the bottom of the CRT monitor device 1 are that (a) the bottom has a relatively long straight surface for mounting the longest control device 2B, and (b) the bottom is the hidden part of the CRT monitor device 1, so that a remarkable change in external apperance does not arise even if the shortest control device 2 is replaced by the longest control device 2B, whereby the total unity of design appearance of the display terminal device is achieved.

As described hereinbefore, the prior display terminal device has problems in that since all the video interface cable, communication cable, power cable, keyboard cable, printer cable, auxiliary cable, etc. are connected to the back surfaces of the control device and the CRT monitor device, and the video interface cable is closely positioned to the power cable and the communication cable particularly, specially shielded high cost cable must be used as the video interface cable between the control device and the CRT monitor device. Another problem is that a number of cables must be connected by the operator at the initial set up of the system or the replacement of the CRT monitor device or the control device to upgrade the function of the system. The invention solves the above problems by directly connecting both the video interface connectors of the control device and the CRT monitor device, and mounting the video interface connector in the front surface of the control device to separate it from the communication connector and cable in the back surface of the control device and from the power cable in the back surface of the CRT monitor device.

## Claims

1. A display terminal device comprising a CRT monitor device (1) and a control device (2) detachably mounted on and connected to said CRT monitor device for supplying video signals to said CRT monitor device.

2. A display terminal device as claimed in claim 1, wherein said control device is detachably mounted on the underside of said CRT monitor device.

3. A display terminal device as claimed in claim 2, in which:

said underside includes a bottom surface (13) and a surface (41) downwardly extending from said bottom surface;

the top surface (9) and a further surface (5) of the control device are adjacent to the bottom surface and the downwardly extending surface respectively; and

a video connector (11) in said further surface mates with a corresponding connector (4) in said downwardly extending surface.

4. A display terminal device as claimed in any preceding claim, in which:

the control device includes a communication connector (17), to which a communication cable from a host computer can be connected.

5. A display terminal device as claimed in any preceding claim, in which:

apertures (34,35) are provided in opposing surfaces of the control device and the CRT monitor device respectively, the arrangement being such that when the control device is mounted on the CRT monitor device the apertures in the opposing surfaces are aligned, thereby facilitating the flow of cooling air between the control device and the CRT monitor device.

6. A display terminal device as claimed in any preceding claim,

including a latching means (24,26,29,30) operable to hold and support the control device in mounted position on the CRT monitor device.

7. A display terminal device as claimed in claim 6, in which the latching means comprises one or more hooks (24) for supporting the control device on the CRT monitor device, and a resiliently mounted detent (29) to latch the control device in said mounted position.

8. A display terminal device as claimed in claim 7, in which the hook or hooks (24) are disposed such that when the control device is presented to the CRT monitor device for mounting thereon the hook or hooks pass through one or more corresponding support apertures (26); the arrangement being such that subsequent movement of the control device into latching engagement with the CRT monitor device simultaneously engages the hooks to support the control device on the CRT monitor device and connects the control device to the CRT monitor device.

9. A CRT monitor device (1) comprising:

means for detachably mounting a control device for supplying video signals to the CRT monitor device, on the exterior of the CRT monitor device; and

a video connector (4) for receiving the video signals, the connector being mounted on the CRT monitor device and being arranged to mate with a corresponding video connector (11) on the control device when the control device is mounted on the CRT monitor device.

10. A CRT monitor device as claimed in claim 9, in which the control device is detachably mounted on the underside of the CRT monitor device.

11. A CRT monitor device as claimed in claim 10, in which:

said underside includes a bottom surface (13) and a surface (41) downwardly extending from said bottom surface;

the top surface (9) and a further surface (5) of the control device are adjacent to the bottom surface and the downwardly extending surface respectively; and

a video connector in said further surface mates with a corresponding connector in said downwardly extending surface.

12. A CRT monitor device as claimed in any of claims 9 to 11 in which,

apertures (34,35) are provided in opposing surfaces of the control device and the CRT monitor device respectively, the arrangement being such that when the control device is mounted on the CRT monitor device the apertures in the opposing surfaces are aligned, thereby facilitating the flow of cooling air between the control device and the CRT monitor device.

13. A CRT monitor device as claimed in any of claims 9 to 12,

including a latching means (24,26,29,30) operable to hold and support the control device in mounted position on the CRT monitor device.

14. A CRT monitor device as claimed in claim 13, in which the latching means comprises one or more hooks (24) for supporting the control device on the CRT monitor device, and a resiliently mounted detent (29) to latch the control device in said mounted position.

15. A CRT monitor device as claimed in claim 14, in which the hook or hooks are disposed such that when the control device is presented to the CRT monitor device for mounting thereon the hook or hooks pass through one or more corresponding support apertures (26); the arrangement being such that subsequent movement of the control device into latching engagement with the CRT monitor device simultaneously engages the hooks to support the control device on the CRT monitor device and mates the video connector (11) on the control device with the video connector (4) on the CRT monitor device.

16. A control device for supplying video signals to a CRT monitor device, comprising:

means for generating said video signals;

means for detachably mounting the control device on the exterior of the CRT monitor device; and

a video connector (11) mounted on the control device and connected to the generating means, the connector being arranged to mate with a corresponding video connector (4) mounted on the CRT monitor device when the control device is mounted on the CRT monitor device.

17. A control device as claimed in claim 16, suitable for mounting on the underside of the CRT monitor device.

18. A control device as claimed in claim 17, in which:

said underside includes a bottom surface (13) and a surface (41) downwardly extending from said bottom surface;

the top surface (9) and a further surface (5) of the control device are adjacent to the bottom surface and the downwardly extending surface respectively; and

a video connector in said further surface mates with a corresponding connector in said downwardly extending surface.

19. A control device as claimed in any of claims 16 to 18,

further comprising a communication connector (17), to which a communication cable from a host computer can be connected.

20. A control device as claimed in any of claims 16 to 19, in which

apertures (34,35) are provided in opposing surfaces of the control device and the CRT monitor device respectively, the arrangement being such that when the control device is mounted on the CRT monitor device the apertures in the opposing surfaces are aligned, thereby facilitating the flow of cooling air between the control device and the CRT monitor device.

21. A control device as claimed in any of claims 16 to 20, further comprising:

one or more hooks (24) for supporting the control device on the CRT monitor device;

and means for latching the control device in mounted position on the CRT monitor device.

22. A control device as claimed in claim 21, in which the hook or hooks are disposed such that when the control device is presented to the CRT monitor device for mounting thereon the hook or hooks pass through one or more corresponding support apertures (26); the arrangement being such that subsequent movement of the control device into latching engagement with the CRT monitor device simultaneously engages the hooks to support the control device on the CRT monitor device and mates the video connector on the control device with the video connector on the CRT monitor device.

FIG. 1

FIG. 2

FIG. 3

FIG. 4

FIG. 5

CRT MONITOR DEVICE
61

PEDESTAL
63

CABLE
65

KEYBOARD
62

CONTROL DEVICE
64

FIG. 6